# EUROPÄISCHE PATENTANMELDUNG

(11) **EP 4 700 248 A1**
(43) Veröffentlichungstag der Anmeldung: **25.02.2026**
(21) Anmeldenummer: 25208062.7
(22) Anmeldetag: 24.04.2015
(51) Int. Cl.: F04D 29/28, F04D 29/30

(54) **LAUFRAD FÜR DIAGONAL- ODER RADIALVENTILATOREN, SPRITZGUSSWERKZEUG ZUR HERSTELLUNG EINES SOLCHEN LAUFRADES SOWIE GERÄT MIT WENIGSTENS EINEM SOLCHEN LAUFRAD**

(30) Priorität: 05.05.2014 DE 102014006756
(62) Teilanmeldung aus: 15001211.0
(71) Anmelder: ZIEHL-ABEGG SE, 74653 Künzelsau (DE)
(72) Erfinder: Lörcher, Frieder, 74542 Braunsbach (DE); Gross, Andreas, 74632 Kirchensall (DE); Hub, Sandra, 74629 Pfedelbach (DE); Ernemann, Lothar, 74081 Heilbronn (DE); Hofmann, Georg, 97941 Tauberbischofsheim (DE)
(74) Vertreter: Patentanwälte Jackisch-Kohl und Kohl

(57) **Zusammenfassung**

Das Laufrad hat eine Bodenscheibe (7) und eine Deckscheibe (1), die durch Flügel (6) miteinander verbunden sind. Die Deckscheibe (1), die Bodenscheibe (7) und die Flügel (6) sind dreidimensional so geformt, dass sie einstückig miteinander im Spritzgussverfahren herstellbar sind. In der Projektion auf einen mit der Rotationsachse (13) koaxialen Zylinder mit mittlerem Durchmesser der Hinter- bzw. Vorderkante (15, 17) schließen die Verlängerungen der Hinter- und/oder der Vorderkante(15, 17) der Flügel (6) mit einer Parallelen zur Rotationsachse (13) einen Winkel ein, von denen wenigstens ein Winkel ungleich 0° ist. Das Spritzgusswerkzeug weist zur Herstellung der Bodenscheibe (7) mit einer Schnittstelle wenigstens einen Formeinsatz auf, der zwischen zwei Schiebern liegt.

## Beschreibung

Die Erfindung betrifft ein Laufrad für Diagonal- oder Radialventilatoren nach dem Oberbegriff des Anspruches 1, ein Spritzgusswerkzeug zur Herstellung eines solchen Laufrades nach dem Oberbegriff des Anspruches 14 und ein Gerät mit wenigstens einem solchen Laufrad nach Anspruch 16.

Es sind Laufräder für Diagonal- oder Radialventilatoren bekannt, die mit einer 2D-Geometrie versehen sind und einteilig als Spritzgussteile gefertigt werden. Allerdings haben Laufräder mit 2D-Geometrie relativ niedrige Wirkungsgrade, geringe Luftleistung und hohe Lärmpegel.

Es sind auch 3D-Laufräder bekannt, die jedoch mehrteilig ausgebildet sind und miteinander verbunden werden müssen. Darum sind solche Laufräder wenig wirtschaftlich herstellbar.

Der Erfindung liegt die Aufgabe zugrunde, das gattungsgemäße Laufrad, das gattungsgemäße Spritzgusswerkzeug und das Gerät so auszubilden, dass eine einfache Fertigung von Laufrädern mit dreidimensionaler Geometrie und somit besonders hohen Wirkungsgraden, besonders hoher Luftleistung und besonders niedriger Akustik, unter Einsatz von nur wenig Material möglich ist.

Diese Aufgabe wird beim gattungsgemäßen Laufrad erfindungsgemäß mit den kennzeichnenden Merkmalen des Anspruches 1, beim gattungsgemäßen Spritzgusswerkzeug erfindungsgemäß mit den kennzeichnenden Merkmalen des Anspruches 14 und beim Gerät mit den Merkmalen des Anspruches 16 gelöst.

Das erfindungsgemäße Laufrad ist dadurch gekennzeichnet, dass seine Bodenscheibe, seine Deckscheibe und seine Flügel dreidimensional so geformt sind, dass sie einstückig miteinander im Spritzgussverfahren hergestellt werden können. In der Projektion auf einen koaxialen Zylinder mit mittlerem Durchmesser der Hinter- bzw. Vorderkante schließen die Verlängerungen der Hinter- und/oder der Vorderkante der Flügel mit einer Parallelen zur Rotationsachse jeweils einen Winkel ein, von denen wenigstens ein Winkel ungleich 0° ist. Die dreidimensionale Laufradgeometrie führt zu einem hohen Wirkungsgrad bei niedrigem Lärmpegel. Das Laufrad ist so gestaltet, dass die Entformbarkeit im Spritzgusswerkzeug sichergestellt ist. Die dreidimensionale Gestaltung ermöglicht, neben hohem Wirkungsgrad, hoher Luftleistung und niedriger Lärmemission, diese Teile dünnwandig auszubilden und dennoch eine hohe Festigkeit des Laufrades zu erreichen. Vorteilhaft ist wenigstens einer der Winkel größer 0°.

Das Laufrad ist erfindungsgemäß in einer besonders vorteilhaften Ausführungsform so ausgebildet, dass die beiden Winkel zwischen den Projektionen der Verlängerungen der Hinter- und/oder der Vorderkante der Flügel mit der Parallelen zur Drehachse deutlich unterschiedlich sind, was zu einem gekrümmten Verlauf der Hinter- und/oder Vorderkante führen kann.

Vorzugsweise ist der der Deckscheibe zugeordnete Winkel größer als der der Bodenscheibe zugeordnete Winkel.

Vorteilhaft ist die Deckscheibe so ausgebildet, dass ihr Durchmesser, im Axialschnitt gesehen, vom Lufteinlass aus in Richtung auf den Luftauslass zunimmt. Eine solche Gestaltung erleichtert die Entformbarkeit im Spritzgusswerkzeug. Zudem trägt eine solche Gestaltung der Deckscheibe zum hohen Wirkungsgrad und zum geringen Lärmpegel bei.

Die Erzeugende der Deckscheibe ist bevorzugt derart gekrümmt ausgebildet, dass der Durchmesser der Deckscheibe vom Lufteinlass zum Luftauslass stetig zunimmt. Mit der Erzeugenden lässt sich die dreidimensionale Form der Deckscheibe sehr einfach festlegen.

Zur leichten Entformbarkeit des Laufrades aus dem Spritzgusswerkzeug trägt weiter vorteilhaft bei, dass die Erzeugende mit Abstand vom Lufteinlass gerade verläuft.

Bei einer weiteren vorteilhaften Ausbildung nimmt der Durchmesser der Bodenscheibe, im Axialschnitt gesehen, von dem der Deckscheibe zugewandten Ende aus zu. Eine so gestaltete Bodenscheibe trägt zum hohen Wirkungsgrad und zum geringen Lärmpegel vorteilhaft bei.

Die Erzeugende der Bodenscheibe verläuft von der der Deckscheibe zugewandten Seite aus derart gekrümmt, dass der Durchmesser der Bodenscheibe im Axialschnitt zunimmt. Mit der Erzeugenden lässt sich die dreidimensionale Form der Bodenscheibe einfach an die erforderlichen Einsatzbedingungen des Laufrades anpassen.

Zur leichten Entformbarkeit trägt weiter vorteilhaft bei, dass die Erzeugende mit Abstand von ihrem der Deckscheibe zugewandten Ende gerade verläuft.

Bei einer besonders vorteilhaften Ausführungsform, bei der hohe Luftleistung, hoher Wirkungsgrad und niedrige Lärmemission erreicht werden, ist der Winkel α2, den die Bodenscheibe an ihrem der Deckscheibe abgewandten freien Rand im Axialschnitt mit einer Radialen einschließt, um mindestens 3° kleiner als der Winkel α1, den die Deckscheibe an ihrem dem Luftauslass zugewandten Ende im Axialschnitt mit einer Radialen einschließt.

Damit trotz dünnwandiger Ausbildung der Flügel eine hohe Festigkeit sichergestellt ist, ist der Übergangsbereich der Flügel zur Deckscheibe und/oder zur Bodenscheibe verrundet ausgebildet. Dadurch kann der kritische Übergangsbereich so ausgebildet werden, dass beim Einsatz des Laufrades Spannungsspitzen vermieden und die Belastungen in diesem Bereich sicher aufgenommen werden können.

Damit der Übergangsbereich an die Belastungen im Einsatz angepasst werden kann, ist es vorteilhaft, wenn sich der Übergang der Flügel zur Deckscheibe und/oder zur Bodenscheibe auf beiden Seiten der Flügel unterschiedlich breit erstreckt.

So ist beispielhaft die Verrundung in Flügelrichtung und in Richtung der Deck/Bodenscheibe unterschiedlich breit.

Um das Laufrad einfach mit dem Motor verbinden zu können, ist die Bodenscheibe mit einer entsprechenden Schnittstelle zum Verbinden mit einem Motor versehen.

Hat der Motor nur kleine Abmessungen, dann ist die Schnittstelle in vorteilhafter Weise eine ringförmige Scheibe, die am inneren Rand der Bodenscheibe vorgesehen ist.

Damit ein einfacher Anschluss des Laufrades an den Motor möglich ist, liegt die Schnittstelle innerhalb des von den Flügeln des Laufrades umgebenen Bereiches, in Achsrichtung des Laufrades gesehen.

Ist das Laufrad für einen Motor mit größeren Abmessungen vorgesehen, dann ist in vorteilhafter Weise die Schnittstelle mit Abstand vom inneren Rand der Bodenscheibe vorgesehen und durch von der Außenseite der Bodenscheibe abstehende Dome gebildet. In die Dome können die Befestigungsschrauben direkt oder in in die Dome eingelegte Metallhülsen geschraubt werden, um den Motor mit dem Laufrad zu verbinden.

Bei einer bevorzugten Ausführungsform wird die Verbindung des Laufrades an den Motor mit selbstschneidenden Kunststoffschrauben hergestellt, die in die Dome geschraubt werden.

Um die Strömungsführung im Bereich der Schnittstelle zu verbessern, ist bei einer vorteilhaften Ausführungsform an den inneren Rand der Bodenscheibe eine Strömungskappe ansetzbar.

Sie ist vorteilhaft so ausgebildet, dass sie mit ihrer Außenseite wenigstens annähernd eine stetige Fortsetzung der Innenseite der Bodenscheibe bildet.

Das erfindungsgemäße Spritzgusswerkzeug ist zur Herstellung der Deckscheibe zusammen mit der Schnittstelle mit wenigstens einem Formeinsatz versehen, der sich zwischen zwei Schiebern befindet. Mit dem Formeinsatz wird innerhalb der beiden Formwerkzeuge die Bodenscheibe mit der Schnittstelle innerhalb des Spritzgusswerkzeuges hergestellt. Die Form des Formeinsatzes richtet sich danach, welche Form die Schnittstelle haben soll. Somit ist es durch einfachen Wechsel des Formeinsatzes möglich, Bodenscheiben mit unterschiedlichen Schnittstellen im Spritzgusswerkzeug einfach herzustellen.

Da mit dem Formeinsatz die gesamte Bodenscheibe mit Schnittstelle geformt wird, sind die Werkzeugkosten noch nicht optimal. Aus diesem Grunde ist bei einer vorteilhaften Ausbildung vorgesehen, dass der Formeinsatz ein Adaptereinsatz ist, in den kleinere Formeinsätze zur Ausbildung der Schnittstelle eingesetzt werden können. Der Adaptereinsatz dient im Wesentlichen zur Bildung der Bodenscheibe, während die eingesetzten kleinen Formeinsätze zur Ausbildung der Schnittstelle an der Bodenscheibe herangezogen werden. Durch die Verwendung des Adaptereinsatzes mit den kleinen Formeinsätzen werden Werkzeugkosten eingespart, da für die Ausbildung der unterschiedlichen Schnittstellen nur die kleinen Formeinsätze erforderlich sind.

Das erfindungsgemäße Gerät hat wenigstens einen Ventilator mit einem erfindungsgemäßen Laufrad.

Vorteilhaft hat das Gerät wenigstens zwei nebeneinander angeordnete Ventilatoren. Dadurch kann das Gerät hervorragend gekühlt werden.

Wenn der Achsabstand zwischen den Ventilatoren höchstens etwa 1,75*D1 beträgt, wobei D1 der Durchmesser der Deckscheibe im Bereich des Luftauslasses ist, kann das Gerät trotz der wenigstens zwei Ventilatoren kompakt ausgebildet sein.

Ein bezogen auf die Luftleistung besonders kompaktes Gerät kann so gestaltet werden, dass die Geräteseitenwände ohne signifikante Einbußen an Wirkungsgrad, Luftleistung oder Geräuscharmut in radialer Richtung sehr nah an den Luftauslass des Ventilatorlaufrades heranreichen. Ein besonders kompaktes Gerät hat charakteristische Abmessungen der Geräteseitenwände Dg (Durchmesser im Fall einer runden Form, Seitenwandabstände im Fall einer viereckigen Form) von Dg<=1.75 D1, wobei D1 der Durchmesser der Deckscheibe im Bereich des Luftauslasses ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand der in den Zeichnungen dargestellten Ausführungsbeispiele näher erläutert. Es zeigen
- Fig. 1: ein erfindungsgemäßes Laufrad,
- Fig. 2: einen Axialschnitt durch das Laufrad gemäß Fig. 1,
- Fig. 3: eine Seitenansicht des erfindungsgemäßen Laufrades,
- Fig. 3a: eine zweidimensionale Darstellung der Schaufelhinterkanten mit charakteristischen Winkeln,
- Fig. 4a bis Fig. 4c: unterschiedliche Gestaltungsmöglichkeiten der Einzelheit X in Fig. 2 in vergrößerter Darstellung,
- Fig. 5: eine Stirnansicht des erfindungsgemäßen Laufrades,
- Fig. 6: ein Axialschnitt durch das Laufrad, das mit einer Motoranbindung für baulich große Motoren versehen ist,
- Fig. 6a: in einer Darstellung gemäß Fig. 2 charakteristische Winkel zur Festlegung des Profilschnitts der Flügel des Laufrades,
- Fig. 6b: in einer Darstellung gemäß Fig. 2 das Laufrad mit Motor,
- Fig. 7: in schematischer Darstellung einen Schnitt durch ein Spritzgusswerkzeug, mit dem ein Laufrad mit einer Motoranbindung für baulich kleine Motoren hergestellt wird,
- Fig. 8: in einer Darstellung entsprechend Fig. 7 das Spritzgusswerkzeug zur Herstellung eines Laufrades mit einer Motoranbindung für baulich große Motoren,
- Fig. 9 und Fig. 10: jeweils in Darstellungen entsprechend Fig. 7 weitere Ausbildungen von Spritzgusswerkzeugen zur Herstellung des Laufrades,
- Fig. 11: in schematischer Darstellung und im Schnitt eine Strömungskappe des Laufrades,
- Fig. 12: in vergrößerter Darstellung einen Schnitt längs der Linie A-A in Fig. 6a,
- Fig. 13: ein erfindungsgemäßes Gerät mit zwei nebeneinander angeordneten Ventilatoren,
- Fig. 14: eine weitere Ausführungsform eines erfindungsgemäßen Gerätes.

Das Laufrad ist für einen Ventilator vorgesehen, der ein Diagonal- oder Radialventilator sein kann. Das Laufrad ist durch eine freie dreidimensionale Geometriegestaltung gekennzeichnet. Hierunter ist zu verstehen, dass an den Ventilatorflügeln keine geraden Linien oder ebene oder extrudierte Flächen auftreten. Unter Extrudieren versteht man hier die Bildung der Fläche der Ventilatorflügel durch Parallelverschieben einer erzeugenden Kurve im Raum. Ventilatoren mit solchen Laufrädern haben einen sehr hohen Wirkungsgrad bei besonders geringem Lärmpegel. Das Laufrad ist einstückig als Spritzgussteil ausgebildet. Für die Ventilatorflügel, die Boden- und die Deckscheibe des Laufrades werden kleine Wandstärken eingesetzt, so dass Material zur Herstellung des Laufrades eingespart werden kann. Dennoch zeichnet sich das Laufrad durch eine hohe Festigkeit aus.

Das Laufrad ist vorteilhaft aus einem faserverstärkten Thermoplast hergestellt. Bei möglichen Ausführungsformen kann der Thermoplast Polyamid (PA6, PA66, PA66/6, PAPA, PPA, PA 4.6, PA12), Polyester (PBT, PET), Polypropylen (PP), PPS, PES, PESU, PEEK, ABS, PC oder ASA sein, vorzugsweise ein Polyamid oder Polypropylen. Die Verstärkungsfasern können aus Glas, Kohlenstoff, Aramid, einem Thermoplast (PET, PA) oder einer Naturfaser (Bsp.: Flachs, Hanf, Sisal, Jute, Kokos), vorzugsweise aus Glasfaser, bestehen.

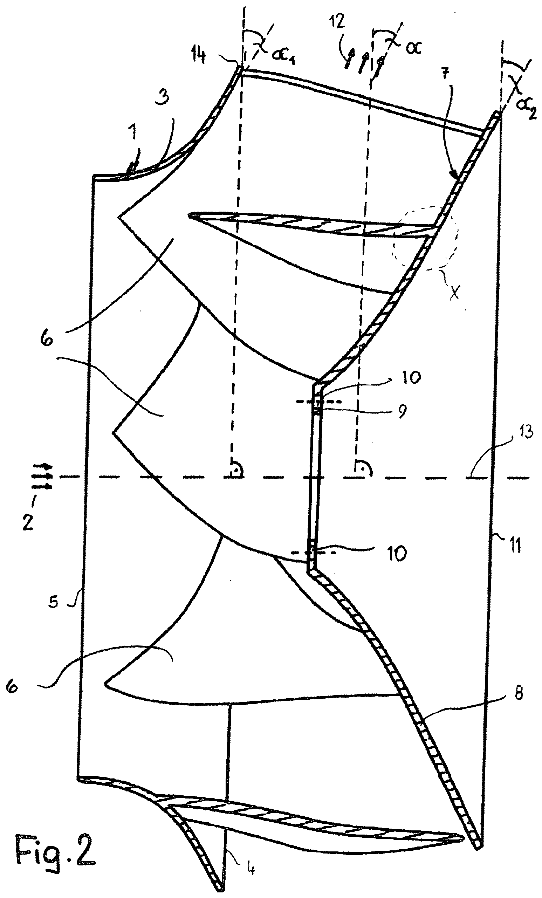

Das Laufrad hat eine Deckscheibe 1, über die Luft in Richtung der Strömungspfeile 2 angesaugt wird. Die Deckscheibe 1 ist als Rotationskörper ausgebildet und hat einen in Einströmrichtung sich stetig erweiternden Strömungsquerschnitt. Vorteilhaft ist die Deckscheibe 1 so ausgebildet, dass sie im Bereich des Auslasses 4 (Fig. 2) einen etwa zwischen 30 bis 70 % größeren Durchmesser hat als im Bereich des Einlasses 5.

Die Deckscheibe 1 ist durch Flügel 6 mit der Bodenscheibe 7 verbunden. Sie ist ebenso wie die Bodenscheibe 1 im Ausführungsbeispiel als Rotationskörper ausgebildet. Die Bodenscheibe 7 ist im Wesentlichen konisch ausgebildet und hat einen Mantel 8, der zusammen mit der gegenüberliegenden Wandung der Deckscheibe 1 einen Durchlass für die Strömungsluft bildet. Die Bodenscheibe 7 hat an ihrem freien Ende den größten Durchmesser, der beispielhaft größer ist als der Durchmesser des Einlasses 5 der Deckscheibe 1. Vom freien Ende des Mantels 8 aus nimmt der Durchmesser der Bodenscheibe 7 in Richtung auf die Deckscheibe 1 vorteilhaft stetig ab. An das innere Ende des Mantels 8 schließt eine Motoranbindung 9 an, die eine Schnittstelle zum Anschluss des Antriebsmotors bildet und als Ringscheibe ausgebildet ist. Die Motoranbindung 9 liegt in einer Radialebene des Laufrades. Die Motoranbindung hat über den Umfang verteilt angeordnete Durchtrittsöffnungen 10 für Befestigungsschrauben.

Der Mantel 8 der Bodenscheibe 7 kann im Axialschnitt über seine Länge gerade verlaufen. Im dargestellten Ausführungsbeispiel verläuft der Mantel 8 im Anschluss an die Motoranbindung 9 gekrümmt und verläuft erst mit Abstand von ihr gerade.

Die Deckscheibe 1 und die Bodenscheibe 7 sind bevorzugt als Rotationskörper ausgebildet. Sie können aber auch andere beliebige Formen haben, je nach Anwendungsfall und Ausbildung des Ventilators, an dem das Laufrad montiert werden soll.

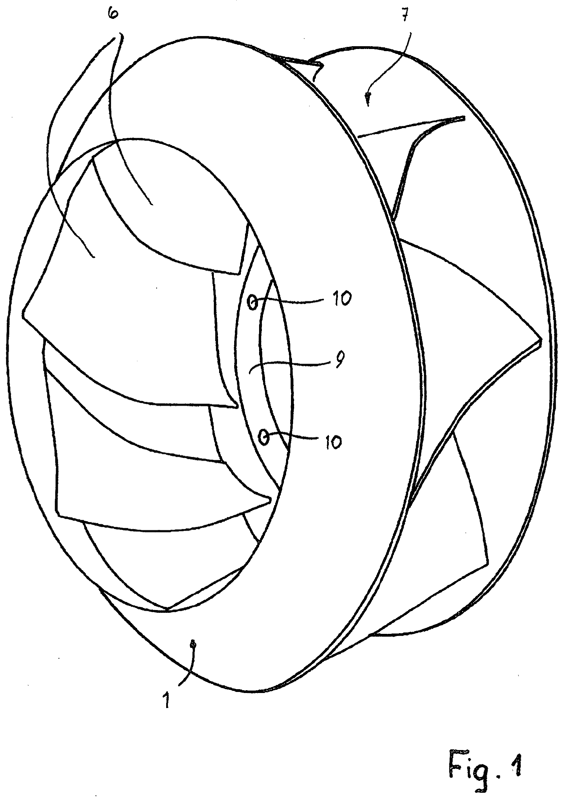

Die Deckscheibe 1 und die Bodenscheibe 7 sind durch die Flügel 6 miteinander verbunden. Wie sich aus den Fig. 1 bis 3 ergibt, haben die Flügel 6 geringen Abstand vom Einlass 5 der Deckscheibe 1 sowie geringen Abstand vom freien Rand 11 der Bodenscheibe 7. Die Flügel 6 sind gleich ausgebildet und sorgen beim Einsatz des Ventilators dafür, dass die Luft über die Einlassöffnung 5 der Deckscheibe 1 in Richtung der Strömungspfeile 2 angesaugt und schräg nach außen in Richtung der Strömungspfeile 12 zwischen der Wandung 3 der Deckscheibe 1 und dem Mantel 8 der Bodenscheibe 7 strömt. Im Axialschnitt gemäß Fig. 2 liegt die auf die Zeichenebene, die einer Axialebene entspricht, projizierte Strömungsrichtung 12 unter dem spitzen Winkel α zur zugehörigen Radialen des Laufrades.

Der Winkel α beschreibt den Winkel zwischen der auf die Axialebene projizierten gedachten mittleren Strömungsrichtung 12 am Luftradaustritt, die aus geometrischen Eigenschaften des Laufrades abgeschätzt wird, und der in der Axialebene enthaltenen Senkrechten auf die Rotationsachse 13 des Laufrades. Für Diagonalventilatoren liegt der Winkel α zwischen etwa 20° und etwa 70°. Der Winkel α wird dabei nach der Beziehung α=0.5*( α1 + α2) definiert. Dabei wird der Winkel α1 ≥ α2 eingehalten, wenn ein hoher Wirkungsgrad bei geringem Schallpegel gefordert wird. Bei einer besonders vorteilhaften Ausführungsform, bei der hohe Luftleistung, hoher Wirkungsgrad und niedrige Lärmemission erreicht werden, ist α2 um mindestens 3° kleiner als α1. Ein vorteilhafter Winkelbereich liegt zwischen etwa 5° und 15°.

Der Winkel α1 wird zwischen der in der Axialebene enthaltenen Senkrechten auf die Rotationsachse 13 und der in der Axialebene enthaltenen Verlängerung der Wandung 3 der Bodenscheibe 1 bestimmt. Die Senkrechte auf die Rotationsachse 13 verläuft hierbei durch das freie Ende 14 der Bodenscheibe 1.

In gleicher Weise wird der Winkel α2 zwischen der in der Axialebene enthaltenen Senkrechten auf die Rotationsachse 13 und der in der Axialebene enthaltenen Verlängerung des Mantels 8 der Bodenscheibe 7 bestimmt. Hierbei verläuft die Senkrechte durch den freien Rand 11 der Bodenscheibe 7.

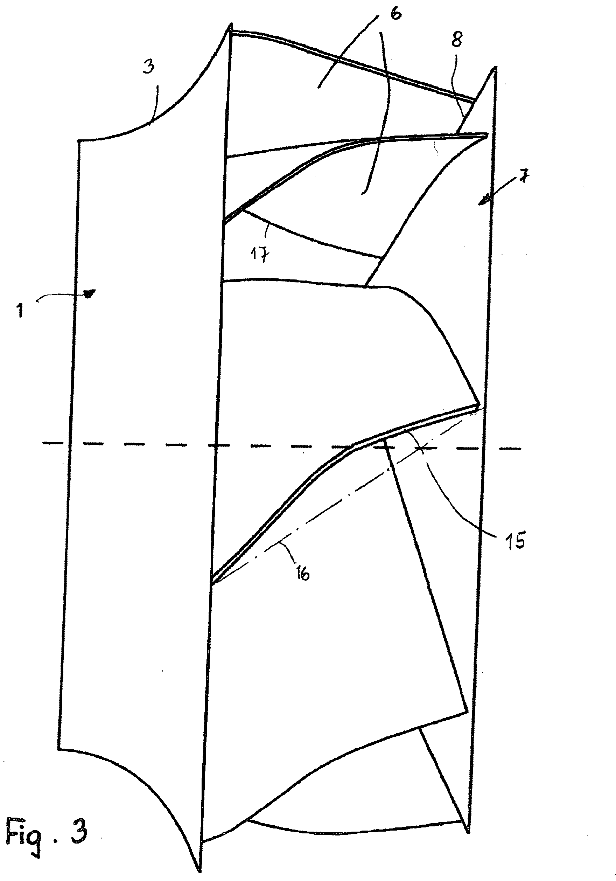

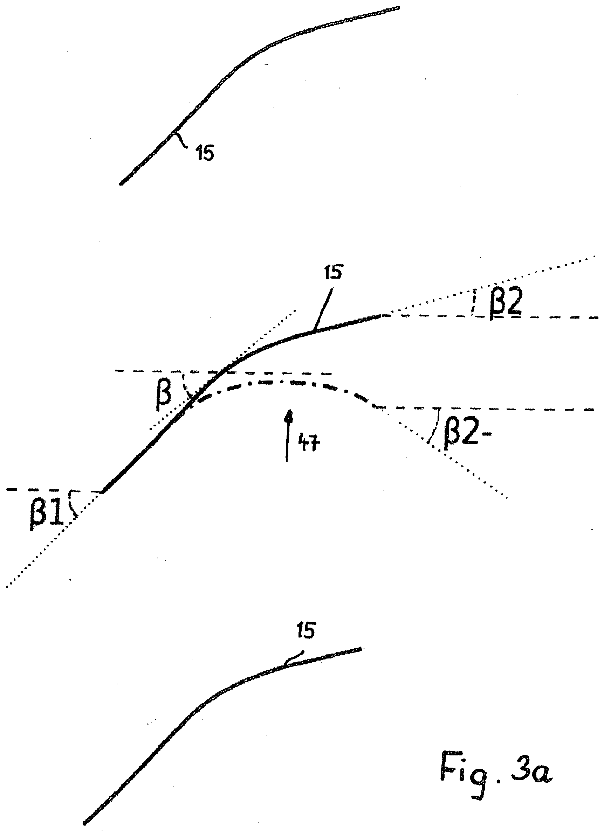

Anhand von Fig. 3 wird die dreidimensionale Gestaltung der Flügel 6 erläutert. Die Flügel 6 haben Hinterkanten 15, deren Verlaufskurve sich wesentlich von der zugehörigen geraden Sehne 16 unterscheidet. Sie verbindet die beiden Enden der Hinterkante 15. Auch die Vorderkante 17 der Flügel 6 hat eine Verlaufskurve, die sich wesentlich von der zugehörigen geraden Sehne unterscheidet. Der maximale Abstand der Sehne 16 von der Flügelhinterkante ist bei einer vorteilhaften Ausführungsform größer als 8 % der Länge der Sehne 16. Dies gilt analog auch für die Flügelvorderkante und deren Sehne. Die Flügel 6 sind so gestaltet, dass das gesamte Laufrad trotz der komplexen dreidimensionalen Geometrie in einem Spritzgusswerkzeug einfach und kostengünstig hergestellt werden kann.

Im Folgenden wird beschrieben, wie die zweidimensionale Darstellung der Hinterkanten 15 in Figur 3a erhalten wird. In Figur 3a sind die Hinterkanten 15, welche in Figur 3 durch schmale Flächen dargestellt sind, vereinfacht durch den Verlauf ihrer Mittellinie dargestellt. Um Figur 3a aus Figur 3 herzuleiten, werden die vereinfacht als Linie dargestellten Hinterkanten auf eine Zylindermantelfläche projiziert. Der für die Projektion benutzte Zylinder hat hierbei die Rotationsachse als Achse und als Durchmesser den mittleren Durchmesser der beiden Endpunkte der Hinterkante 15. Die verwendete Projektionsmethode ist die des geringsten Abstandes (der projizierte Punkt ist der Punkt auf der Zylindermantelfläche mit geringstem Abstand zum Originalpunkt). Das auf den Zylindermantel projizierte Bild der Hinterkante 15 wird noch in die Zeichenebene abgewickelt, so erhält man schließlich die Darstellung der Hinterkanten 15 in Figur 3a. In ganz analoger Weise kann man eine zweidimensionale Darstellung des Verlaufes der Flügelvorderkante 17 herleiten.

Die Winkel β, β1 und β2 in Fig. 3a haben positive Werte. Positive Winkel wirken sich tendenziell so aus, dass sich der Hinterkantenverlauf in Drehrichtung 47 des Laufrads bewegt, wenn man sich auf der Hinterkante in Richtung Bodenscheibe bewegt.

Es sind, je nach aerodynamischen Anforderungen an das Laufrad, auch negative Winkel ß, ß1 und ß2 denkbar. In Fig. 3a ist beispielhaft ein negativer Winkel ß2- schematisch dargestellt. Der negative Winkel ß2- wird in gleicher Weise ermittelt, wie zuvor für positive Werte des Winkels ß2 erläutert worden ist.

Zur annähernden Bestimmung der Dreidimensionalität der Flügel 6 und damit des Laufrades werden die Winkel β, β1 und β2 (Fig. 3a) herangezogen, die im Betrag deutlich größer sind als 0°. Diese Winkel sind in Fig. 3a die Winkel zwischen der jeweiligen Tangenten (punktierte Darstellung) an die Schaufelhinterkante 15 und der gestrichelt eingezeichneten Achsparallelen. Beispielsweise können die beiden Winkel β1 und β2 an den Endpunkten der Schaufelhinterkante 15 im Betrag größer als etwa 10° sein. Vorteilhaft ist es, wenn die Winkel β1 und β2 positive Werte besitzen. Die beiden Winkel β1 und β2 (Fig. 3a) können gleich groß, aber auch wesentlich unterschiedlich voneinander sein. Bei einer besonders vorteilhaften Ausführungsform unterscheiden sich die beiden Winkel β1 und β2 um mehr als 10°. Dabei ist β1 größer als β2. Der Verlauf der Winkels β vom Anfangspunkt der Hinterkante 15 an der Deckscheibe 1, wo er den Wert β1 annimmt, und dem Endpunkt der Hinterkante 15 an der Bodenscheibe 7, wo er den Wert β2 annimmt, ist im Ausführungsbeispiel monoton fallend. Es ist auch ein nicht monotoner Verlauf des Winkels β denkbar.

Die für die Schaufelhinterkante beschriebenen Verläufe der Winkel β, β1 und β2 können analog auch für den Verlauf der Schaufelvorderkante angewendet werden. Es können Schaufelhinterkantenverlauf oder Schaufelvorderkantenverlauf oder beide Verläufe die beschriebenen Eigenschaften haben, um dadurch eine dreidimensionale Laufradgeometrie zu beschreiben. Bei einer vorteilhaften Ausführungsform verlaufen die Hinterkante 15 und die Vorderkante 17 des Flügels 6 tangentenstetig, d.h. sie weisen keinen Knick auf.

Betragsmäßig große Winkel β, β1 und β2 führen zu aerodynamischen und aeroakustischen Vorteilen. Aus fertigungstechnischen Gründen (Entformbarkeit aus dem Spritzgusswerkzeug bei einsteiliger Fertigungsweise) ist es vorteilhaft, betragsmäßig nicht zu große Winkel zu wählen. So sind vorteilhaft β1 und β2 betragsmäßig nicht größer als 50°, sowie der betragsmäßig größte Winkel ß über die gesamte Hinterkante 15 gesehen nicht größer als 65°.

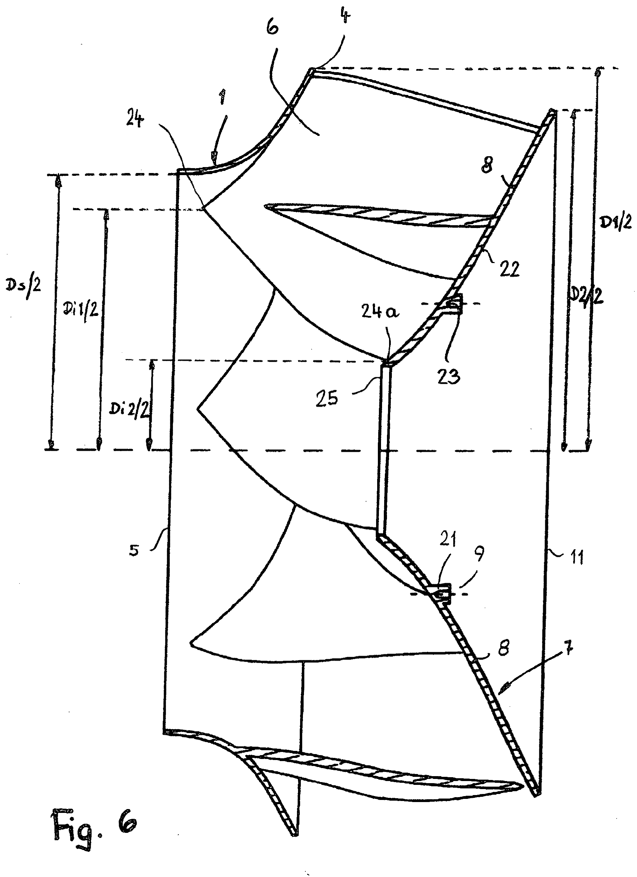

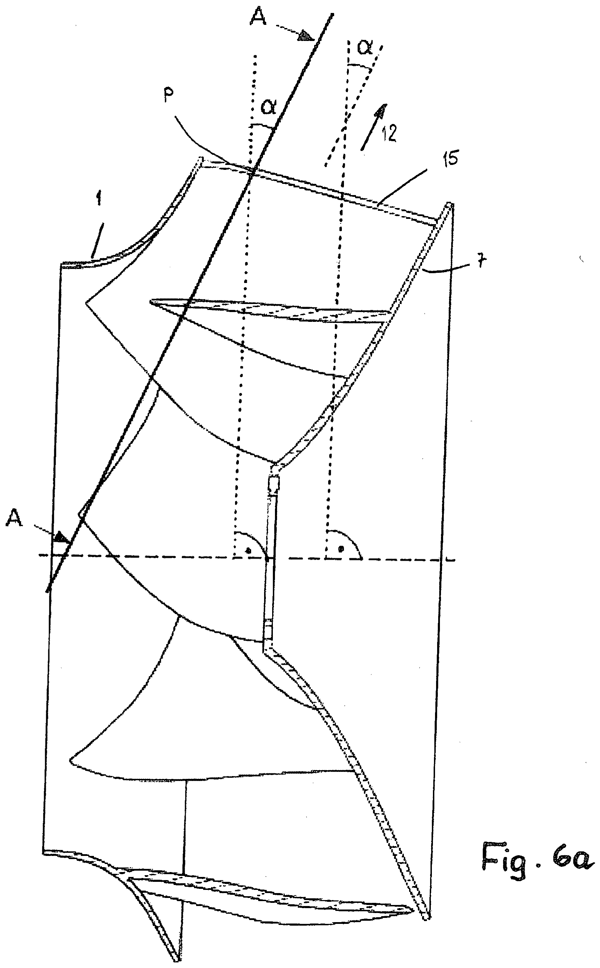

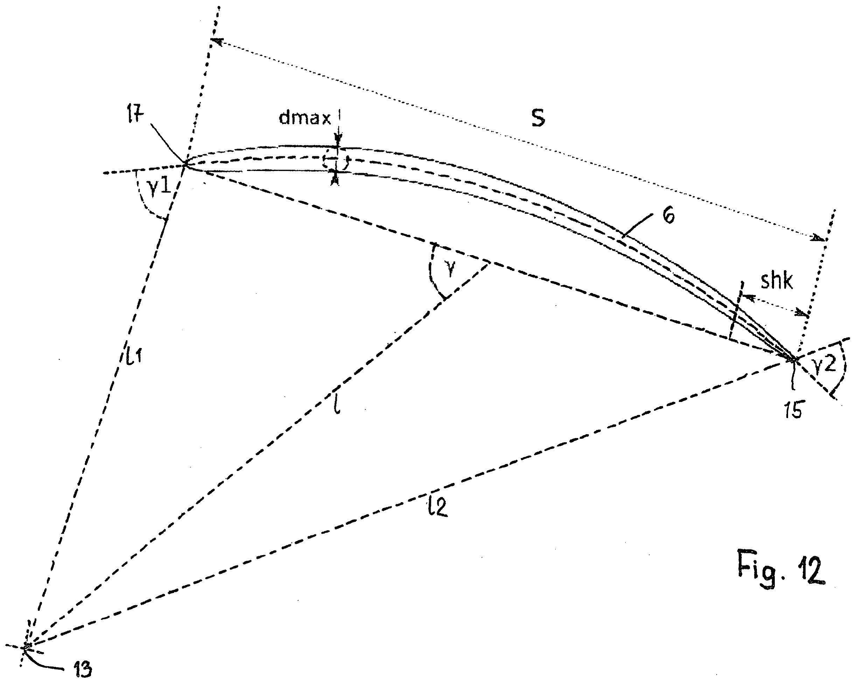

In Figur 12 wird ein Querschnitt eines Flügels 6 gezeigt. Ein solcher Querschnitt entsteht durch Schneiden eines Flügels 6 mit einer Schnittebene A-A, wie sie in Figur 6a dargestellt ist. Die Lage der Schnittebenen A-A wird nun noch genauer beschrieben.

Jede mögliche Schnittebene A-A schneidet die Mittellinie der Flügelhinterkante 15 in einem Punkt P (Fig. 6a). In diesem Punkt P verläuft die Schnittebene A-A parallel zur gedachten, auf die lokale Axialebene projizierten Strömungsaustrittsrichtung 12, die durch den Winkel α beschrieben wurde. Zudem verläuft die Schnittebene A-A im Punkt P parallel zur lokalen Richtung der Rotationsgeschwindigkeit (Umfangsrichtung). Es werden nur Schnittebenen betrachtet, die sowohl Schaufelhinterkante als auch Schaufelvorderkante schneiden. Durch diese Bedingung entsteht eine Schnittebene, die diejenige am nächsten der Deckscheibe 1 ist, sowie eine Schnittebene, die diejenige am nächsten der Bodenscheibe 7 ist. Diese beiden extremen Schnittebenen stellen Anfang (Deckscheibe) und Ende (Bodenscheibe) des Verlaufes der Schnittebenen dar.

Ein in beschriebener Weise erhaltener Querschnitt eines Flügels 6 (Fig. 12) ähnelt vorzugsweise einem Tragflügelprofil, wie es von Flugzeugen her bekannt ist. Dies führt zu niedrigen Schallemissionen im Betrieb sowie zu hohen Wirkungsgraden. Um Material und Kosten einzusparen, werden vorzugsweise dünne Profilquerschnitte gewählt. Das Verhältnis der maximalen Profildicke dmax (größter einbeschriebener Kreisdurchmesser) zur Profilsehnenlänge s ist vorzugsweise d/s < 0.04. Um die Lärmemission weiter zu minimieren, ist die Dicke des Flügels 6 im Bereich der Hinterkante 15 (abströmseitig) weiter minimiert. Um eine möglichst kleine Hinterkantendicke fertigungstechnisch realisieren zu können, reduziert sich die Dicke im Bereich shk (die letzten 10% der Sehnenlänge s) massiv. Der Reduktionsfaktor der Dicke vom Beginn bis hin zum Ende dieses Bereiches direkt an der Hinterkante 15 ist größer 30%, vorzugsweise 50%.

Der Winkel γ in der Schnittebene (Fig. 12) bezeichnet den Winkel der Sehne s zu der Linie I, die den Sehnenmittelpunkt mit der Drehachse 13 verbindet. Dieser Winkel γ liegt vorteilhaft zwischen 20° und 70°. Bei einer besonders vorteilhaften Ausführungsform ändert sich dieser Winkel γ zwischen den verschiedenen Schnitten (von Deck- zu Bodenscheibe) um erheblich mehr als 10°. Der Flügel 6 ist demnach verwunden, was besonders vorteilhaft für Wirkungsgrad und Akustik ist.

Die Verwindung der Flügel 6 kann auch anhand der Winkel γ1 und/oder γ2 beschrieben werden. Bei besonders vorteilhaften Ausführungsformen ändern sich die Winkel γ1 und/oder γ2 zwischen den verschiedenen Schnitten (von Deck- zu Bodenscheibe) um erheblich mehr als 10°.

γ1 bezeichnet nach Fig. 12 den Winkel zwischen der Tangente an die Skelettlinie des Flügelprofils an der Flügelvorderkante 17 zu der Linie I1, die die Vorderkante 17 mit der Drehachse 13 verbindet. Analog bezeichnet γ2 nach Fig. 12 den Winkel zwischen der Tangente an die Skelettlinie des Flügelprofils an der Flügelhinterkante 15 zu der Linie I2, die die Hinterkante 15 mit der Drehachse 13 verbindet.

Die Dreidimensionalität eines Flügels wird auch durch die starke Veränderung der Sehnenlänge s zwischen den verschiedenen Schnitten (von Deckzu Bodenscheibe) deutlich. Bei einer besonders vorteilhaften Ausführungsform ändert sich die Sehnenlänge zwischen den beiden äußersten Schnitten (an Deck- und Bodenscheibe) um mehr als 5%.

Bei einer weiteren besonders vorteilhaften Ausführungsform befindet sich der Schnitt mit der längsten Sehnenlänge in einem mittleren Bereich des Laufrades zwischen Deck- und Bodenscheibe. In diesem Fall ist die maximale Sehnenlänge um wenigstens 3% größer als die Sehnenlänge im der Deckscheibe zugeordneten Schnitt sowie um wenigstens 3% größer als die Sehnenlänge im der Bodenscheibe zugeordneten Schnitt.

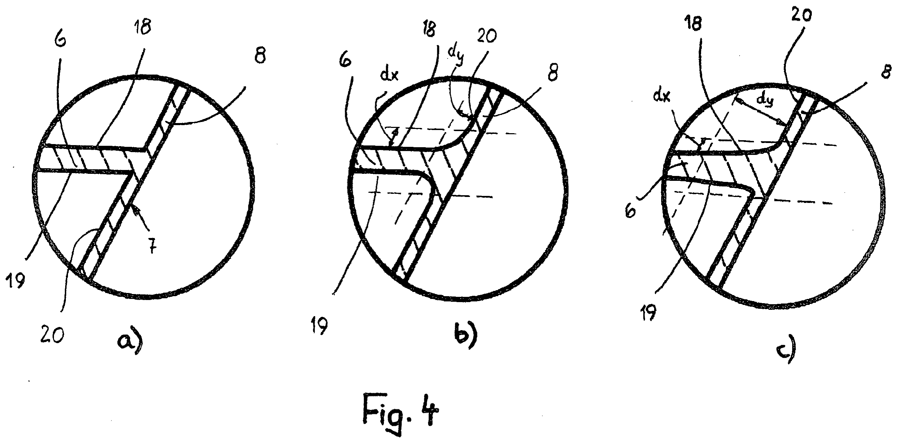

Die Flügel 6 sind einstückig mit der Deckscheibe 1 sowie der Bodenscheibe 7 ausgebildet (Fig. 2). Die Übergänge zwischen den Flügeln 6 und der Boden- bzw. Deckscheibe können unterschiedlich gestaltet sein, was anhand der Fig. 4a bis 4c näher beschrieben wird. Insbesondere können diese Übergänge so gestaltet werden, dass bei geringem Materialeinsatz Spannungsspitzen in diesem Übergangsbereich vermieden oder so stark verringert werden, dass sie im Einsatz des Laufrades nicht problematisch sind.

Bei der Ausbildung gemäß Fig. 4a gehen die beiden Außenseiten 18, 19 des Flügels 6 jeweils scharfkantig in die Innenseite 20 des Mantels 8 der Bodenscheibe 7 über. Aufgrund des scharfkantigen Überganges treten beim Einsatz des Laufrades höhere Spannungsspitzen auf, die mit einer Kerbwirkung verbunden sind. Der Flügel 6 und der Mantel 8 haben dementsprechend eine solche Wandstärke, dass ein Bruch in diesem Übergangsbereich nicht auftritt.

Bei der Ausführungsform gemäß Fig. 4b gehen die Außenseiten 18, 19 des Flügels 6 jeweils abgerundet in die Innenseite 20 des Mantels 8 über. Die Abrundung ist so ausgebildet, dass sie sich etwa gleich weit in Flügelrichtung dy und in Deck/Bodenscheibenrichtung dx erstreckt. Aufgrund der Verrundung nimmt der Querschnitt im Übergangsbereich vom Flügel 6 zum Mantel 8 stetig zu. Wegen dieser Gestaltung treten im Einsatz nur sehr geringe Spannungsspitzen im Übergangsbereich auf.

Beim Ausführungsbeispiel nach Fig. 4c ist die Abrundung auf beiden Seiten des Flügels 6 unterschiedlich ausgebildet. Die Erstreckung des gerundeten Bereiches im Übergangsbereich ist an die im Betrieb auftretende Belastung angepasst. So ist der in Flügelrichtung dy sich erstreckende Übergang wesentlich größer als der in Richtung dx der Deck/Bodenscheibe 1, 7 sich erstreckende Bereich. Beispielhaft ist der Übergangsbereich dy größer etwa 1,5 dx. Durch diese ungleichmäßige Gestaltung des Übergangsbereiches zwischen dem Flügel 6 und der Deck/Bodenscheibe 1, 7 kann das Laufrad an die im Einsatz zu erwartenden Belastungen optimal angepasst werden.

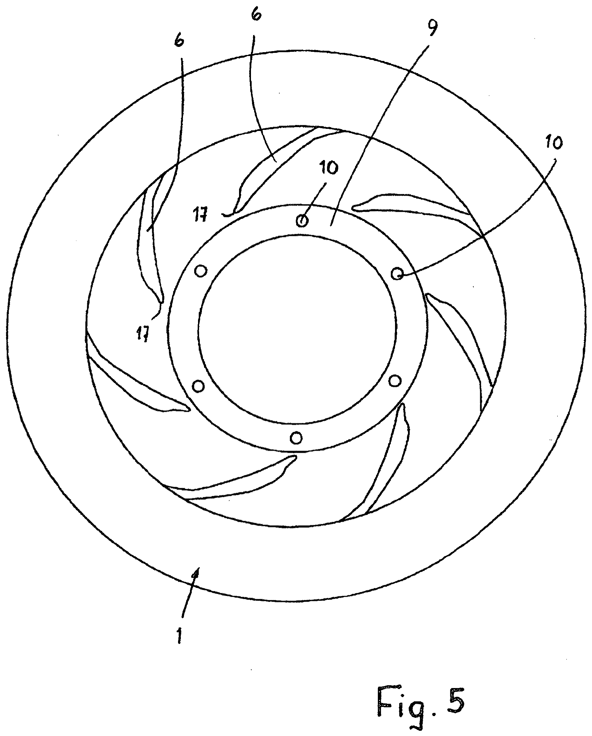

Das Laufrad gemäß den Fig. 1, 2 und 5 ist für Motoren mit einem kleinen Schnittstellendurchmesser vorgesehen. Der Motor kann an die ringförmige Motoranbindung 9 angeschraubt werden. Wie Fig. 5 zeigt, haben die Vorderkanten 17 der Flügel 6 radialen Abstand von der Motoranbindung 9, in Achsrichtung des Laufrades gesehen. Dadurch kann der Motor mit seiner entsprechenden Schnittstelle problemlos an die ringförmige Motoranbindung 9 angeschraubt werden.

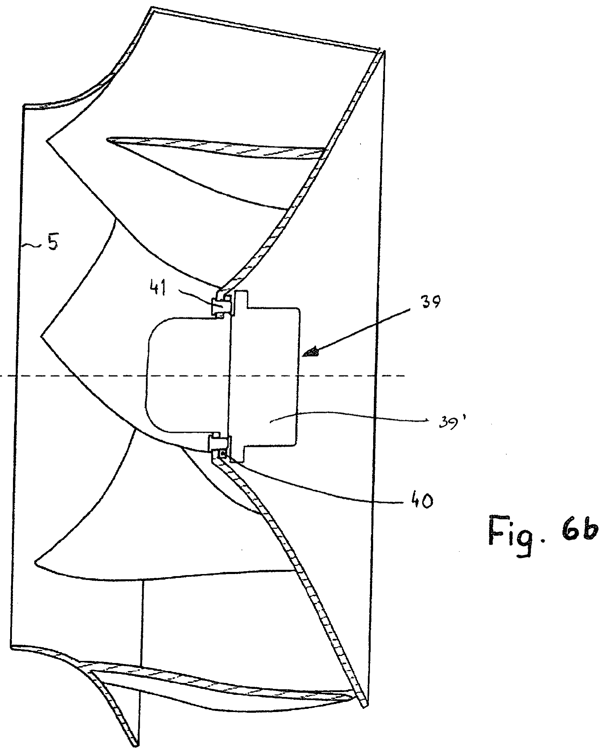

In Figur 6b ist ein derartiges Laufrad mit angeschraubtem Motor 39 gezeigt. Der Motor 39, in dessen rotierenden Flansch 40 Gewindebohrungen eingebracht sind, ist mit Schrauben 41 befestigt. die von der Ansaugöffnung 5 her eingeschraubt sind. Es ist auch denkbar, dass keine Gewindebohrungen im Motorflansch 40 eingebracht sind, sondern die Schrauben 41 mit einer Mutter am Motor 39 befestigt werden. Der stehende Teil 39' des (Außenläufer)motors 39 ist in bekannter Weise montiert.

Bei einer vorteilhaften Ausführungsform sind in die Durchtrittsöffnung 10 des Kunststofflaufrades noch Metallhülsen eingebracht, was zu erhöhter Festigkeit der Schraubverbindung führt.

Soll das Laufrad hingegen für Motoren 39 eingesetzt werden, die einen größeren Schnittstellendurchmesser haben, dann ist die Motoranbindung 9 im Bereich des Mantels 8 der Bodenscheibe 7 vorgesehen (Fig. 6). Die Motoranbindung 9 wird durch mit Abstand in Umfangsrichtung hintereinander liegende Dome 21 gebildet, die von der Außenseite 22 des Mantels 8 der Bodenscheibe 7 vorstehen. Die Dome 21 sind jeweils mit einer Vertiefung 23 zur Aufnahme von Befestigungsschrauben versehen, mit denen der Motor 39 mit seiner entsprechenden Schnittstelle angeschraubt werden kann. Der Motor 39 kann auch über ein zusätzliches Adapterstück aus Blech oder Kunststoff mit der Motoranbindung 9 verbunden werden. Die Bodenscheibe 7 nach Fig. 6 unterscheidet sich von der vorigen Ausführungsform dadurch, dass sie am verjüngten Ende keine Ringscheibe aufweist. Im Übrigen kann die Bodenscheibe 7 gleich ausgebildet sein wie bei der vorigen Ausführungsform. Da die Dome 21 auf der von der Deckscheibe 1 abgewandten Außenseite 22 des Mantels 8 vorgesehen sind, kann das Laufrad bequem an den Motor 39 angeschlossen werden.

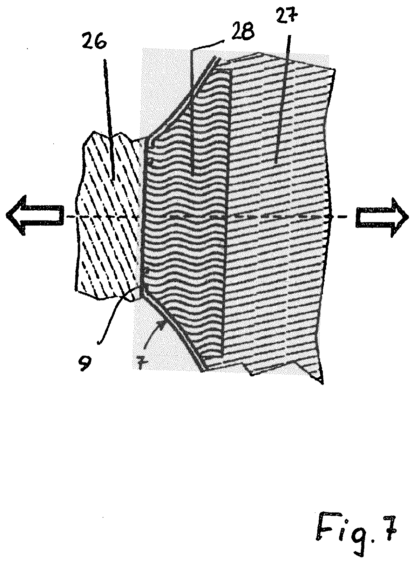

Um das Laufrad mit den unterschiedlichen Motoranbindungen 9 einfach fertigen zu können, werden lediglich unterschiedliche Einsätze für Spritzgusswerkzeuge verwendet, wie dies anhand der Fig. 7 bis 10 erläutert werden wird. Auf diese Weise lassen sich sehr einfach Laufräder für unterschiedlich große Motoren durch Spritzgießen fertigen.

Die beschriebenen Laufräder haben charakteristische Abmessungen bzw. Abmessungsverhältnisse, mit denen eine einfache Herstellung der Laufräder im Spritzgießverfahren möglich ist.

Die Deckscheibe 1 hat im Bereich des Einlasses 5 den Innendurchmesser Ds. Die dem Einlass 5 benachbarten Enden 24 der Flügel 6 liegen auf einem Kreis mit dem Durchmesser Di1. Die auf der Bodenscheibe 7 liegenden Enden 24a der Flügel 6 liegen auf einem Kreis mit dem Durchmesser Di2, im Axialschnitt gesehen. Die Deckscheibe 1 weist im Bereich des Auslasses 4 den Durchmesser D1 auf. Die Bodenscheibe 7 hat am freien Rand 11 den Durchmesser D2.

In Fig. 6 sind nicht die genannten Durchmesser angegeben, sondern die zugehörigen Radien in Form von Ds/2, Di1/2, Di2/2, D1/2 und D2/2.

Die Enden 24 der Flügel 6 liegen in der Darstellung gemäß Fig. 6 nicht in der Zeichenebene, sondern in Bezug auf die Zeichenebene nach hinten versetzt. Die Flügelenden 24 liegen auf dem Mantel 3 der Deckscheibe 1. Je nach Form des Mantels 3 kann darum der Durchmesser Di1 gleich dem Durchmesser Ds, aber auch kleiner oder größer als dieser Durchmesser Ds sein.

Die Durchmesser D1 und D2 sowie Di1 und Di2 unterscheiden sich in jeweils bestimmten Verhältnissen. Darüber hinaus ist beim Laufrad das Verhältnis Ds/D1 verhältnismäßig groß und liegt beispielsweise in einem Bereich größer etwa 0,6, vorzugsweise 0.7..0.85. Dieses Durchmesserverhältnis führt dazu, dass das Laufrad nur eine geringe Geräuschentwicklung im Betrieb zeigt. Durch das große Verhältnis Ds/D1 kann der Ventilator einen großen Luftvolumenstrom fördern.

Der Durchmesser D2 ist kleiner oder gleich D1. Vorzugsweise liegt D2 im Bereich 0.8..0.95 * D1. Durch eine solche Wahl von D2 wird ein hoher Luftvolumenstrom ermöglicht, da der Luftstrom an der Bodenscheibe 7 nicht so weit in radiale Richtung umgelenkt wird.

Hierzu trägt auch bei, dass auch die Durchmesser D1 und D2 so aufeinander abgestimmt sind, dass der Luftaustritt (Strömungspfeile 12) optimal gestaltet ist und zur hohen Geräuscharmut des Laufrades beiträgt.

Der Durchmesser Di2 ist deutlich kleiner als Di1. Bei einer vorteilhaften Ausführungsform liegt Di2 im Bereich von 0.2..0.5* Di1. Dies führt zu hohen Wirkungsgraden und niedriger Akustik. Außerdem charakterisiert dieses Verhältnis auch die Dreidimensionalität und Komplexität der Laufradgeometrie, deren einteilige Entformung aus einem Spritzgusswerkzeug eine Herausforderung ist.

Die Flügel 6 sind ebenfalls so gestaltet, dass sie nur wenig Geräusche beim Einsatz des Laufrades erzeugen, dabei aber die Luft optimal fördern.

Die beschriebenen Laufräder zeichnen sich durch hohe Wirkungsgrade und besonders niedrige Lärmpegel aus. Dabei sind die Laufräder kostengünstig herstellbar, indem sie insbesondere in einem Stück gefertigt werden. Besonders vorteilhaft werden die Laufräder aus einem faserverstärkten Kunststoff als Spritzgussteil gefertigt. Dadurch haben die Laufräder nicht nur ein geringes Gewicht, sondern zeichnen sich durch eine hohe Festigkeit aus. Durch die besondere Gestaltung des Überganges zwischen den Flügeln 6 und dem Mantel 8 der Bodenscheibe 7 bzw. dem Mantel 3 der Deckscheibe 1 lassen sich die Flügel 6 sehr dünnwandig gestalten, ohne dass dies zulasten der Festigkeit geht. Der Übergang zwischen den Flügeln 6 und der Deckscheibe 1 bzw. der Bodenscheibe 7 kann, wie anhand von Fig. 4c beschrieben worden ist, an die im Einsatz des Laufrades entstehende Belastung in diesem Bereich angepasst werden. Die Verrundung am Übergang vom Flügel 6 in die Deckscheibe 1 bzw. die Bodenscheibe 7 wird so gewählt, dass der Übergangsbereich den beim Einsatz des Laufrades entstehenden Belastungen standhält. Die Flügel 6 selbst können dadurch sehr dünnwandig ausgebildet werden, was nicht nur zum geringen Gewicht des Laufrades beiträgt, sondern auch zur Einsparung des Kunststoffes zur Herstellung des Laufrades wesentlich beiträgt.

Nachfolgend wird die Herstellung der unterschiedlichen Laufräder in einem Spritzgusswerkzeug beschrieben. Fig. 7 zeigt schematisch ein Spritzgusswerkzeug, mit dem das Laufrad gemäß den Fig. 1, 2 und 5 hergestellt werden kann, bei dem die Motoranbindung 9 durch die Ringscheibe am inneren Rand der Bodenscheibe 7 gebildet wird. Das Spritzgusswerkzeug hat zwei Schieber 26, 27, die beiderseits eines Formeinsatzes 28 liegen, mit dem die Bodenscheibe 7 mit der Ringscheibe 9 hergestellt wird. Der Formeinsatz 28 begrenzt zusammen mit weiteren (nicht dargestellten) Spritzgussformteilen den Hohlraum, in den der Kunststoff zur Herstellung der Bodenscheibe 7 gespritzt wird. Nach Beendigung des Spritzvorganges können die beiden beiderseits des Formeinsatzes 28 liegenden Schieber 26, 27 in Pfeilrichtung entgegengesetzt zueinander weggefahren werden.

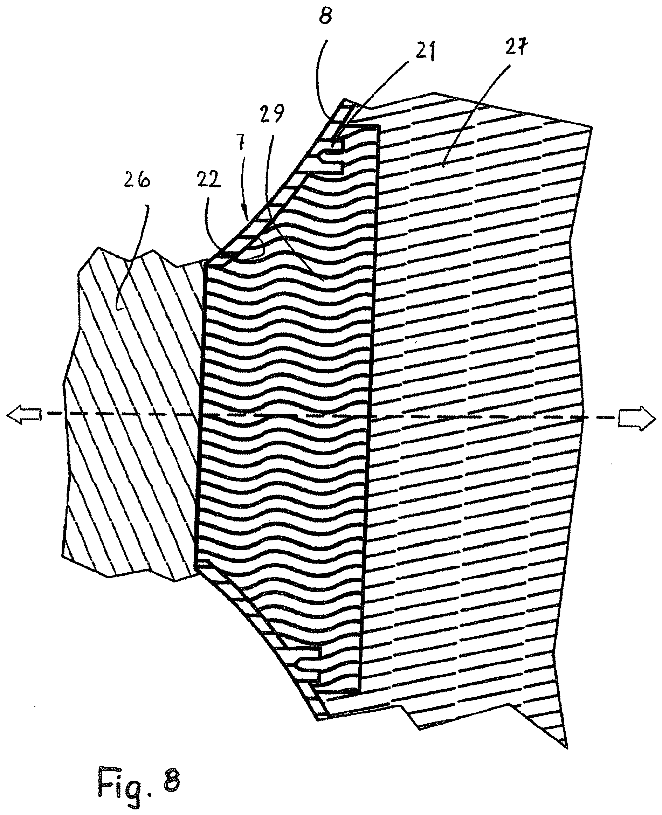

Soll ein Laufrad entsprechend Fig. 6 gefertigt werden, bei dem sich die Motoranbindung 23 nicht am inneren Rand der Bodenscheibe 7 befindet, wird anstelle des Formeinsatzes 28 ein Formeinsatz 29 (Fig. 8) eingesetzt, der so gestaltet ist, dass die Dome 21 an der Außenseite 22 des Mantels 8 der Bodenscheibe 7 hergestellt werden können. Die Schieber 26, 27 bleiben gleich.

Auf die beschriebene Weise kann durch Verwendung unterschiedlicher Einsätze die Bodenscheibe 7 jeweils so hergestellt werden, dass unterschiedlich große Motoren an das Laufrad angeschlossen werden können.

Bei der Motoranbindung 9 gemäß den Fig. 1, 2 und 5 werden die Befestigungsschrauben von der Einlassseite 5 aus durch die Öffnungen 10 in den Motorflansch 40 geschraubt. Der Antriebsmotor selbst befindet sich auf dem von der Bodenscheibe 7 umschlossenen Bereich.

Bei einem Laufrad gemäß Fig. 6 werden die Schrauben von der Seite der Bodenscheibe 7 aus durch den Motor- oder Adapterflansch direkt in die Dome 21 der Bodenscheibe 7 geschraubt. Vorteilhaft werden selbstschneidende und selbstsichernde Kunststoffschrauben direkt in die Dome 21 eingeschraubt. Es können aber auch Metallbuchsen mit Gewinde in die Dome 21 eingelegt sein, in welche die Befestigungsschrauben geschraubt werden.

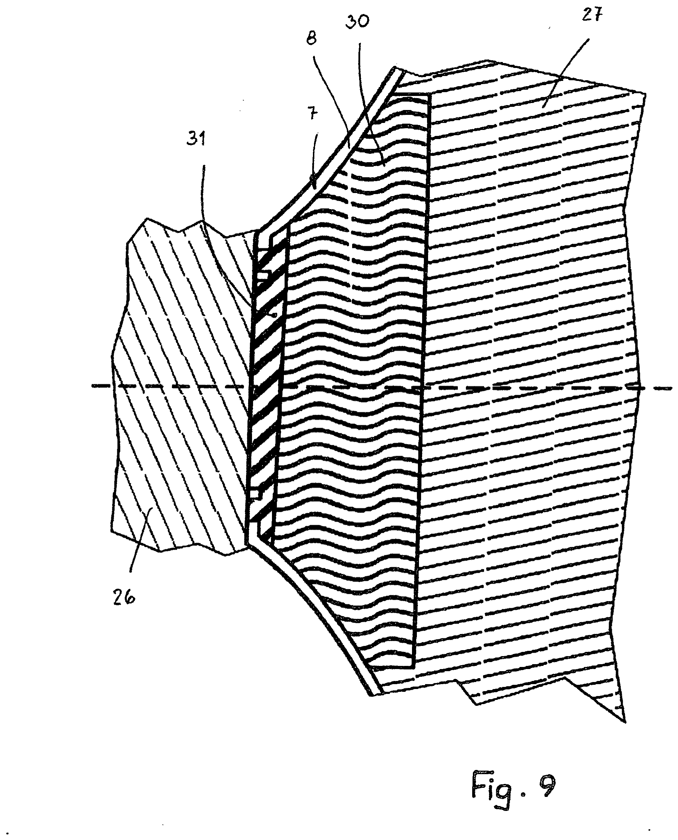

Fig. 9 zeigt ein weiteres Ausführungsbeispiel eines Spritzgusswerkzeuges, mit dem die Bodenscheibe 7 entsprechend den Fig. 1, 2 und 5 gefertigt werden kann. Im Unterschied zur Ausführungsform nach Fig. 7 werden zwei Formeinsätze 30, 31 verwendet, die zwischen den Schiebern 26, 27 des Spritzgusswerkzeuges liegen. Der Formeinsatz 30 bildet einen Adaptereinsatz, in den unterschiedliche Formeinsätze eingelegt werden können, um unterschiedliche Motoranbindungen herzustellen. Der Formeinsatz 30 ist so gestaltet, dass mit ihm im Wesentlichen der Mantel 8 der Bodenscheibe 7 gebildet wird. Der wesentlich kleinere Formeinsatz 31 dient zur Herstellung des restlichen Teils des Mantels 8 sowie der Motoranbindung 9 der Bodenscheibe 7.

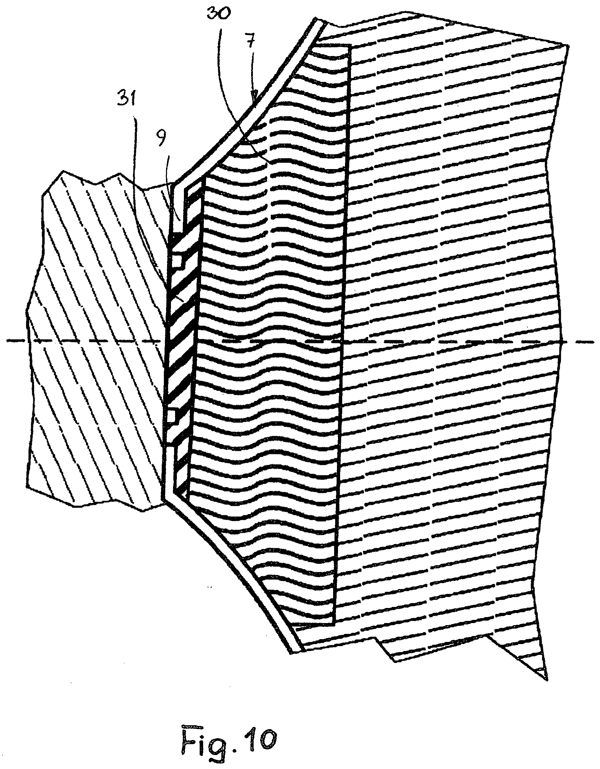

Wie Fig. 10 zeigt, kann durch Auswechseln des kleinen Formeinsatzes 31 eine andere Form der Motoranbindung 9 der Bodenscheibe 7 hergestellt werden. Der Formeinsatz 30 ist gleich wie der Formeinsatz des Spritzgusswerkzeuges gemäß Fig. 9.

Die beiden Beispiele mit den Formeinsätzen 31 zeigen, dass unterschiedliche Motoranbindungen 9 durch Verwendung von sehr kleinen Formeinsätzen einfach hergestellt werden können. Der Adaptereinsatz 30 ermöglicht es, Werkzeugkosten einzusparen, wenn unterschiedliche Ausbildungen der Motoranbindungen 9 am inneren Ende der Bodenscheibe 7 gefertigt werden sollen.

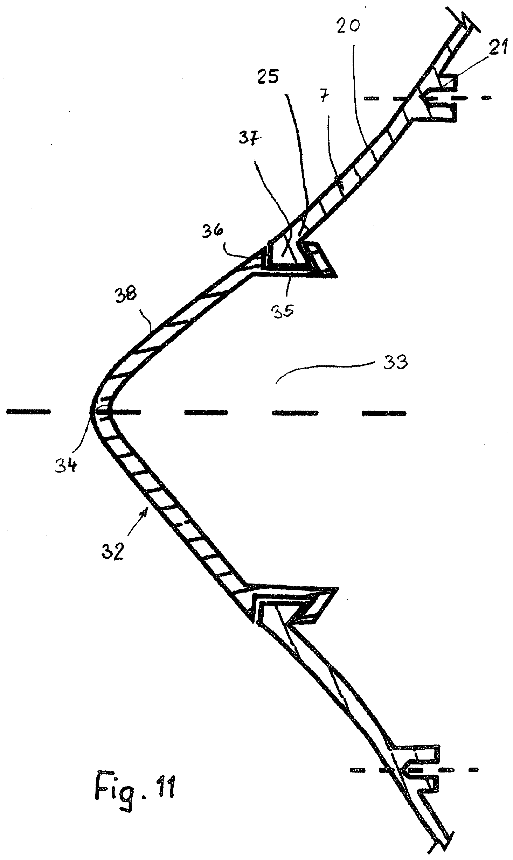

Fig. 11 zeigt die Möglichkeit, an der Bodenscheibe 7 eine Strömungskappe 32 vorzusehen, mit der die Strömungsführung im Bereich der Motoranbindung verbessert werden kann. Die Strömungskappe 32 kann nachträglich am Laufrad angebracht werden. Ihre Gestaltung kann beispielsweise in Abhängigkeit des eingesetzten Motors, dessen äußerer Geometrie und auch dessen thermischen Verhaltens gestaltet werden. Die Strömungskappe 32 ist im Ausführungsbeispiel geschlossen ausgebildet und verschließt dadurch die Öffnung 33 in der Mitte der Bodenscheibe 7. Die Strömungskappe 32 kann auch eine zentrale Öffnung aufweisen, die beispielsweise für einen Teil des Motors, zum Beispiel eine Motorglocke, Platz lässt.

Die dargestellte Strömungskappe 32 ist etwa kegelförmig mit einer abgerundeten Kegelspitze 34 ausgebildet und weist an ihrem freien Rand wenigstens ein Befestigungselement 35 auf, mit dem sie an der Bodenscheibe 7 befestigt werden kann. Das Befestigungselement 35 ist beispielhaft ein umlaufender Ring mit einer außenseitigen Ringnut 36, in die ein Formstück 37 am Rand 25 der Bodenscheibe 7 eingreift. Das Formstück 37 und die Ringnut 36 greifen nach Art einer Schwalbenschwanznut ineinander, wodurch die Strömungskappe 32 sicher mit der Bodenscheibe 7 verbunden ist.

Die Außenseite 38 der Strömungskappe 32 bildet eine im Wesentlichen stetige Fortsetzung der Innenseite 20 der Bodenscheibe 7.

Die Strömungskappe 32 kann auf jede geeignete Weise mit der Bodenscheibe 7 verbunden sein, beispielsweise durch Schnapphaken, mittels einer Verschraubung und dergleichen.

Die beschriebenen Laufräder eignen sich insbesondere für den Einsatz bei Betriebspunkten mit eher niedrigen Strömungswiderständen. Die Laufräder sind kompakt ausgebildet, so dass sie auch für enge Einbausituationen eingesetzt werden können. Infolge der einteiligen Ausbildung können die Laufräder mit entsprechenden Spritzgusswerkzeugen wirtschaftlich hergestellt werden.

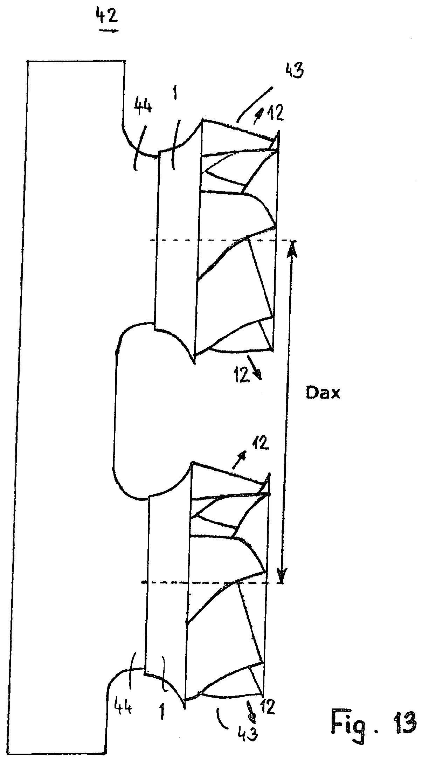

Fig. 13 zeigt ein Gerät 42, welches beispielsweise ein Splittgerät, ein Dachventilator oder eine Wärmepumpe sein kann, an dem zwei Ventilatoren 43 mit erfindungsgemäßen Laufrädern angebracht sind. Diese Ventilatoren 43 saugen Luft aus dem Gerät 42. Durch die Formgebung des Laufrades wird eine sehr enge Anordnung mehrerer Ventilatoren 43 nebeneinander ermöglicht, ohne dass große Einbußen bei Wirkungsgrad oder Akustik auftreten. Der Grund liegt vor allem in der Wahl des Abströmwinkels α, aber auch der optimalen dreidimensionalen Flügelgeometrie. Es ist nun möglich, in einer sehr kompakten Anordnung zwei oder mehrere erfindungsgemäße Ventilatorlaufräder parallel mit Achsabstand Dax von 1.75*D1 oder weniger (insbesondere 1.4..1.7*D1) anzuordnen und dabei leise und energieeffizient zu bleiben.

Die Ventilatoren 43 können neben- und/oder übereinander angeordnet werden. Je nach Größe des zu kühlendes Gerätes 42 kann die Zahl der Ventilatoren 43 gewählt werden. Die Ventilatoren sind mit ihrer Deckscheibe 1 an jeweils eine Einlaufdüse 44 des Gerätes 42 angeschlossen. Da die Luftströme aus den Ventilatoren in Richtung der Strömungspfeile 12 schräg nach außen austreten, lassen sich die Ventilatoren verhältnismäßig eng nebeneinander am Gerät 42 anordnen, ohne dass die aus den Ventilatoren austretenden Luftströme 12 einander behindern.

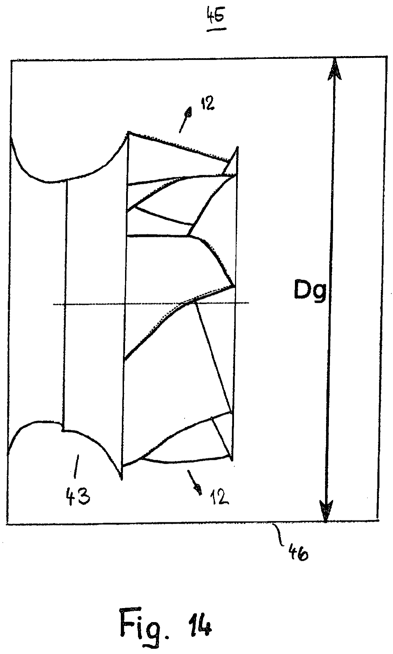

Figur 14 zeigt ein Gerät 45, welches beispielsweise ein Klimakastengerät oder ein Rohrventilator sein kann, beim dem ein Ventilator 43 mit erfindungsgemäßem Laufrad Luft von links in das Gerät 45 hineindrückt. Die Form der Gerätewand 46 kann im Durchmesser rund (Rohr) oder auch viereckig (Klimakasten) sein. Abströmseitig stören konstruktions- oder platzbedingt die Seitenwände 46 die Luftströmung. Durch die spezielle Form des erfindungsgemäßen Laufrades können die störenden Gerätewände 46 sehr nah an den Ventilator 43 heranrücken, ohne erhebliche Einbußen hinnehmen zu müssen (Akustik, Wirkungsgrad). Das erlaubt eine sehr kompakte Bauweise. Der Abstand Dg zwischen den Gerätewänden 46 kann < 1.75*D1, insbesondere 1.4... 1.7*D1, gewählt werden.

Die beschriebenen Laufräder können für unterschiedlichste Geräte und Ventilatoren eingesetzt werden. So können die Laufräder bei Kanal- oder Rohrventilatoren, bei Präzisionsklimageräten, bei Wärmepumpen, bei Kompakt- oder Kastenklimageräten, bei der Elektronikkühlung, bei der Generatorkühlung, bei Lüftungsboxen oder Wohnungslüftungsgeräten vorteilhaft eingesetzt werden.

## Patentansprüche

1. Laufrad für Diagonal- oder Radialventilatoren, mit einer Bodenscheibe (7) und einer Deckscheibe (1), die durch dreidimensional geformte Flügel (6) miteinander verbunden sind, die einstückig mit der Bodenscheibe (7) und der Deckscheibe (1) ausgebildet sind,
**dadurch gekennzeichnet, dass** in der Projektion auf einen mit der Rotationsachse (13) koaxialen Zylinder mit mittlerem Durchmesser der Hinter- bzw. Vorderkante (15, 17) die Verlängerungen der Hinter- und /oder Vorderkante (15, 17) der Flügel (6) mit einer Parallelen zur Rotationsachse (13) einen Winkel (β1, β2) einschließen, von denen wenigstens ein Winkel (β1, β2) ungleich 0° ist.

2. Laufrad nach Anspruch 1,
**dadurch gekennzeichnet, dass** der Durchmesser der Deckscheibe (1) im Axialschnitt vom Lufteinlass (5) in Richtung auf den Luftauslass (4) zunimmt.

3. Laufrad nach Anspruch 2,
**dadurch gekennzeichnet, dass** die Erzeugende der Deckscheibe (1) derart gekrümmt verläuft, dass der Durchmesser der Deckscheibe (1) vom Lufteinlass (5) in Richtung auf den Luftauslass (4) stetig zunimmt, wobei vorteilhaft die Erzeugende mit Abstand vom Lufteinlass (5) gerade verläuft.

4. Laufrad nach einem der Ansprüche 1 bis 3,
**dadurch gekennzeichnet, dass** der Durchmesser der Bodenscheibe (7) im Axialschnitt von der der Deckscheibe (1) zugewandten Seite aus zunimmt, wobei vorzugsweise die Erzeugende der Bodenscheibe (7) von der der Deckscheibe (1) zugewandten Seite aus derart gekrümmt verläuft, dass der Durchmesser der Bodenscheibe (7) zunimmt, vorteilhaft mit Abstand von ihrem der Deckscheibe (1) zugewandten Ende gerade verläuft.

5. Laufrad nach einem der Ansprüche 1 bis 4,
**dadurch gekennzeichnet, dass** der Winkel (α2), den die Bodenscheibe (7) an ihrem freien Rand (11) im Axialschnitt mit einer Radialen einschließt, kleiner ist als der Winkel (α1), den die Deckscheibe (1) an ihrem dem Luftauslass (4) zugewandten Ende im Axialschnitt mit einer Radialen einschließt.

6. Laufrad nach einem der Ansprüche 1 bis 5,
**dadurch gekennzeichnet, dass** der Übergangsbereich der Flügel (6) zur Deckscheibe (1) und/oder zur Bodenscheibe (7) verrundet ist, wobei sich der Übergang der Flügel (6) zur Deckscheibe (1) und/oder zur Bodenscheibe (7) auf beiden Seiten der Flügel (6), vorzugsweise unterschiedlich breit erstreckt.

7. Laufrad, insbesondere nach Anspruch 6,
**dadurch gekennzeichnet, dass** die Verrundung in Flügelrichtung (dy) und in Richtung (dx) der Deck/Bodenscheibe (1, 7) unterschiedlich breit ist.

8. Laufrad nach einem der Ansprüche 1 bis 7,
**dadurch gekennzeichnet, dass** die Bodenscheibe (7) mit einer Schnittstelle (9, 21) zum Verbinden mit einem Motor (39) versehen ist.

9. Laufrad nach Anspruch 8,
**dadurch gekennzeichnet, dass** die Schnittstelle (9) eine ringförmige Scheibe ist, die am inneren Rand der Bodenscheibe (7) vorgesehen ist und vorteilhaft innerhalb des von den Flügeln (6) umgebenen Bereiches liegt, in Achsrichtung des Laufrades gesehen.

10. Laufrad nach Anspruch 8,
**dadurch gekennzeichnet, dass** die Schnittstelle (21) mit Abstand vom inneren Rand der Bodenscheibe (7) vorgesehen und durch von der Außenseite (22) der Bodenscheibe (7) abstehende Dome gebildet ist, und dass vorteilhaft die Verbindung des Laufrades an den Motor (39) mit selbstschneidenden Kunststoffschrauben, die in die Dome (21) geschraubt werden, hergestellt wird.

11. Laufrad nach einem der Ansprüche 1 bis 10,
**dadurch gekennzeichnet, dass** an den inneren Rand der Bodenscheibe (7) eine Strömungskappe (32) ansetzbar ist, die vorteilhaft mit ihrer Außenseite (38) wenigstens annähernd eine stetige Fortsetzung der Innenseite (20) der Bodenscheibe (7) bildet.

12. Laufrad, insbesondere nach einem der Ansprüche 1 bis 11,
**dadurch gekennzeichnet, dass** die Winkel (β1, β2 ) unterschiedlich sind.

13. Laufrad, insbesondere nach einem der Ansprüche 1 bis 12,
**dadurch gekennzeichnet, dass** der der Deckscheibe (1) zugeordnete Winkel (β1) größer ist als der der Bodenscheibe (7) zugeordnete Winkel (β2).

14. Spritzgusswerkzeug zur Herstellung des Laufrades nach einem der Ansprüche 1 bis 13, mit Formwerkzeugen, in die ein Kunststoff zur Herstellung des Laufrades eingespritzt wird,
**dadurch gekennzeichnet, dass** zur Herstellung der Bodenscheibe (7) mit der Schnittstelle (9, 21) wenigstens ein Formeinsatz (28 bis 31) vorgesehen ist, der zwischen zwei Schiebern (26, 27) liegt.

15. Spritzgusswerkzeug nach Anspruch 14,
**dadurch gekennzeichnet, dass** der Formeinsatz (30) ein Adaptereinsatz ist, in den kleinere Formeinsätze (31) zur Ausbildung der Schnittstelle (9, 21) einsetzbar sind.

16. Gerät mit wenigstens einem Ventilator (43) mit einem Laufrad nach einem der Ansprüche 1 bis 13.

17. Gerät nach Anspruch 16,
**dadurch gekennzeichnet, dass** das Gerät (42) wenigstens zwei nebeneinander angeordnete Ventilatoren (43) aufweist, deren Achsabstand (Dax) voneinander höchstens etwa 1.75*D1 beträgt, wobei D1 der Durchmesser der Deckscheibe (1) im Bereich des Luftauslasses (4) ist.

18. Gerät nach Anspruch 17,
**dadurch gekennzeichnet, dass** der druckseitig an einen erfindungsgemäßen Ventilator (23) angeschlossene Geräteinnenraum einen Durchmesser oder radialen Seitenwandabstand (Dg) von höchstens etwa 1.75*D1 besitzt, wobei D1 der Durchmesser der Deckscheibe (1) im Bereich des Luftauslasses (4) ist.
